(19) 

Europäisches
Patentamt

European
Patent Office

Office européen
des brevets

(11) **EP 4 613 535 A1**

(12) **EUROPEAN PATENT APPLICATION**

(43) Date of publication:
**10.09.2025 Bulletin 2025/37**

(21) Application number: **24162037.6**

(22) Date of filing: **07.03.2024**

(51) International Patent Classification (IPC):
**B60L 3/00** (2019.01)     **B60L 3/04** (2006.01)
**B60L 58/19** (2019.01)     **H02H 3/00** (2006.01)

(52) Cooperative Patent Classification (CPC):
**B60L 3/0046; B60L 3/04; B60L 58/19;**
B60L 2200/36

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventor: **NYSTRÖM, Mats
423 53 TORSLANDA (SE)**

(74) Representative: **Kransell & Wennborg KB
P.O. Box 2096
403 12 Göteborg (SE)**

(54) **A METHOD FOR CONTROLLING FUSE TRIGGERING OF BATTERY PACKS IN AN ENERGY STORAGE SYSTEM**

(57)     A computer system (17, 117) comprising processing circuitry (118) configured to: determine a system energy threshold value (SET) in an energy storage system (30, 130) comprising a plurality of parallelly arranged battery packs (31, 32, 33, 131, 132, 133) connectable to a common traction voltage bus (135), the system energy threshold value (SET) corresponding to the product of the squared value of the a system threshold current (IST) on the common traction voltage bus (135) and a first time requirement (t1); determine a maximum allowed system peak current value (IM), the maximum allowed system peak current value (IM) corresponding to that of the common traction voltage bus (135); set an individual energy fuse trigger (IEFT) for each battery pack (31, 32, 33, 131, 132, 133) corresponding to the product of the squared value of the an individual battery pack current threshold (IBT) and a second time requirement (t2), wherein the individual battery pack current threshold (IBT) is set based on the maximum allowed system peak current value (IM) in relation to the number (N) of battery packs.

Fig. 2

**Description**

**TECHNICAL FIELD**

The disclosure relates generally to operating management of an energy storage system of a vehicle. In particular aspects, the disclosure relates to a method for controlling fuse triggering of battery packs in an energy storage system. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

A vehicle typically comprises an engine for propelling the vehicle. The engine may be powered by various means, such as e.g. by liquid or gaseous fuel in a combustion engine or an internal combustion engine, or by electric power in an electric machine. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and the electrically driven auxiliary equipment may be referred to as loads. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, several battery packs are included in the energy storage system by being parallelly connected to a common traction voltage bus (or common traction power bus), sometimes referred to as multi-battery pack system. The load and/or power source is also connected to the common traction voltage bus. Hereby, the supplied power can be adapted based on the number of battery packs, and/or higher power requirements of the vehicle may be met. Moreover, a multi-battery pack system provide a redundancy, as several battery packs may supply power individually. Typically, each battery pack is associated with a switch, or contactor, enabling connection and disconnection of the battery pack relative the common traction voltage bus and the load and/or power source. The battery packs of the energy storage system may be equipped with fuses, or overcurrent fuses. Typically, each battery pack comprises a fuse which protects the battery pack from an overcurrent in the battery pack. The fuses of the battery packs are also often adapted to be activated based on an overcurrent on a system level. The setting of the fuse triggering for the battery packs may thus be complex, and take many considerations into account.

**SUMMARY**

According to a first aspect of the disclosure, a computer system comprising processing circuitry is provided. The processing circuitry is configured to: determine a system energy threshold value in an energy storage system comprising a plurality of parallelly arranged battery packs connectable to a common traction voltage bus, the system energy threshold value corresponding to the product of the squared value of a system threshold current on the common traction voltage bus and a first time requirement; determine a maximum allowed system peak current value, the maximum allowed system peak current value corresponding to that of the common traction voltage bus; set an individual energy fuse trigger for each battery pack corresponding to the product of the squared value of an individual battery pack current threshold and a second time requirement, wherein the individual battery pack current threshold is set based on the maximum allowed system peak current value in relation to the number of battery packs, and the second time requirement is set based on the system energy threshold value in relation to the squared value of the maximum allowed system peak current value. The first aspect of the disclosure may seek to overcome problems related to undesirable and manually setting of individual fuse triggers of the battery packs of the energy storage system, and/or undesirable and manually re-configuration of the individual fuse triggers of the battery packs in case the number of battery packs changes, e.g. if a battery pack fail and needs to be removed from the energy storage system. Thus, the processing circuitry may be configured to dynamically determine individual energy fuse trigger for each battery pack based on the current configuration of battery packs of the energy storage system and the overall system's energy requirements, such as the maximum allowed system peak current value and the system energy threshold value. This adaptability improved the performance and safety under varying operational conditions of the energy storage systems. A technical benefit may include a tailored approach to preventing undesired overcurrent situations, and/or undesired triggering of individual fuses the battery packs. Hereby, the safety of the energy storage system may be enhanced, and/or the battery life of the battery packs may be improved, with reduced wear owing to avoided overcurrent situations. The ability of the energy storage system to dynamically adjust the individual energy fuse trigger based on the number of battery packs in the energy storage system makes it scalable and flexible. This is particularly advantageous for electric vehicles that might be customized for different uses or that may require battery pack replacement or upgrades. Moreover, by the setting of the individual energy fuse triggers as described above, the operation of the energy storage system can be achieved within optimal/desirable parameters and by preventing damages from electrical faults.

Each one of the battery packs typically comprises a plurality of series-connected battery cells. The plurality of battery cells may be clustered into battery modules, e.g. comprising a plurality of parallelly connected battery cells, wherein each battery pack comprises a plurality of series-connected battery modules. Typically, each one of the battery packs comprise an individual fuse. The fuses are typically controllable fuses for which the triggering value of the fuses can be set by the processing circuitry.

Optionally in some examples, including in at least one preferred example, the processing circuitry is further configured to: define the battery packs of the energy storage system as those being electrically connected to the common traction voltage bus, such that the setting of the individual energy fuse trigger is adapted in response to a change in the number of battery packs connected to the common traction voltage bus. A technical benefit may include improved setting of the individual energy fuse trigger based on the present configuration of battery packs in the energy storage system. For example, in case a certain battery pack is disconnected from the common traction voltage bus, due to failure or due to other reasons, e.g. a lesser need of power from the energy storage system, the individual energy fuse trigger for the battery packs that stay connected to the common traction voltage bus may be adapted to the new configuration. Hereby, the ability of the energy storage system to dynamically adjust the individual energy fuse trigger based on the number of battery packs is further improved. The battery packs are typically connected to the common traction voltage bus by means of corresponding contactors. Thus, a connected battery pack is a battery pack which is electrically connected to the common traction voltage bus and for which the associated contactor is closed, while a disconnected battery pack is a battery pack which is not electrically connected to the common traction voltage bus and for which the associated contactor is open. The disconnected battery pack(s) may thus not form part of the energy storage system with regards to the previously described setting of the individual energy fuse trigger for each battery pack.

Optionally in some examples, including in at least one preferred example, the processing circuitry is further configured to set the individual battery pack current threshold to at least the ratio of the maximum allowed system peak current value and the number of battery packs. A technical benefit may include a well-defined distribution of the maximum allowed system peak current value with regards to the battery packs.

Optionally in some examples, including in at least one preferred example, the processing circuitry is further configured to set the individual battery pack current threshold to the ratio of the maximum allowed system peak current value and the number of battery packs, or the product of the ratio of the maximum allowed system peak current value and the number of battery packs, and the first maximum allowed overcurrent value of between 110 % and 180 %, preferably about 150 %. A technical benefit may include a well-defined distribution of the maximum allowed system peak current value with regards to the battery packs. Thus, the individual battery pack current threshold may be set to the value resulting from the ratio of the maximum allowed system peak current value and the number of battery packs, or to the product of a first factoring being the value resulting from the ratio of the maximum allowed system peak current value and the number of battery packs, and a second factor being the first maximum allowed overcurrent value. As a further example, the processing circuitry may be further configured to set the individual battery pack current threshold to a value between a first value being the ratio of the maximum allowed system peak current value and the number of battery packs, and a second value being the product of the ratio of the maximum allowed system peak current value and the number of battery packs, and the first maximum allowed overcurrent value.

Optionally in some examples, including in at least one preferred example, the processing circuitry is further configured to set the second time requirement to at least the ratio of the system energy threshold value and the product of the squared value of the maximum allowed system peak current value and the square value of a second maximum allowed overcurrent value of between 110 % and 180 %, preferably about 150 %. A technical benefit may include a suitable time trigger for the individual battery pack current threshold for the battery packs.

Optionally in some examples, including in at least one preferred example, the processing circuitry is further configured to set the second time requirement to the ratio of the system energy threshold value and the squared value of the maximum allowed system peak current value, or the ratio of the system energy threshold value and the product of the squared value of the maximum allowed system peak current value and the squared value of a second maximum allowed overcurrent value of between 110 % and 180 %, preferably about 150 %. A technical benefit may include a suitable time trigger for the individual battery pack current threshold for the battery packs. Thus, the second time requirement may be set to the value resulting from the ratio of the system energy threshold value and the squared value of the maximum allowed system peak current value, or to the value resulting from the ratio of the system energy threshold value and the value resulting from the product of a first factor being the squared value of the maximum allowed system peak current value and a second factor being the squared value of the second maximum allowed overcurrent value. As a further example, the processing circuitry may be further configured to set the second time requirement to a value between a first value being the ratio of the system energy threshold value and the product of the squared value of the maximum allowed system peak current value and the squared value of the second maximum allowed overcurrent value, and a second value being the ratio of the system energy threshold value and the squared value of the maximum allowed system peak current value.

Optionally in some examples, including in at least one preferred example, the processing circuitry is further configured to set the individual energy fuse trigger for each battery pack as the product of the squared value of the individual battery pack current threshold and the second time requirement, wherein the individual battery pack current threshold is set to the ratio of the maximum allowed system peak current value and the number of battery packs, and the second time requirement is set to the ratio of the system energy threshold value and the squared value of the maximum allowed system peak current value. A technical benefit may include a suitable setting of the individual energy fuse trigger for each battery pack. For example, in case the maximum allowed system peak current value is 1500 A and the number of battery packs is six, the individual battery pack current threshold is set to 1500 divided by six, i.e. 250 A. Moreover, and for example, in case the system energy threshold value is 5 MA$^2$s (5 000 000 A$^2$s), the second time requirement is 5 MA$^2$s divided by the 1500$^2$, i.e. 2.2 s. Thus, the individual energy fuse trigger for each battery pack would be based on 250 A for 2.2 s, or 138 kA$^2$s.

Optionally in some examples, including in at least one preferred example, the processing circuitry is further configured to set the individual energy fuse trigger for each battery pack as the product of the squared value of the individual battery pack current threshold and the second time requirement, wherein the individual battery pack current threshold is set to the product of the ratio of the maximum allowed system peak current value and the number of battery packs, and the first maximum allowed overcurrent value of between 110 % and 180 %, preferably about 150 %, and the second time requirement is set to the ratio of the system energy threshold value and the product of the squared value of the maximum allowed system peak current value and the squared value of a second maximum allowed overcurrent value of between 110 % and 180 %, preferably about 150 %. A technical benefit may include a suitable setting of the individual energy fuse trigger for each battery pack. For example, by a first and second maximum allowed overcurrent value of 150 %, and using the same values as in the previous paragraph, i.e. a maximum allowed system peak current value of 1500 A, six battery packs and a system energy threshold value of 5 MA$^2$s, the individual battery pack current threshold would be set to 150 % times 1500 divided by six, i.e. 375 A, and the second time requirement would be set to 5 MA$^2$s divided by the product of 1500$^2$ and 1.5$^2$, i.e. 1.0 s. Thus, the individual energy fuse trigger for each battery pack would be based on 375 A for 0.99 s, or 139 kA$^2$s.

Optionally in some examples, including in at least one preferred example, the processing circuitry is further configured to set a first individual energy fuse trigger for each battery pack as the product of the squared value of the individual battery pack current threshold and the second time requirement, wherein the individual battery pack current threshold is set to the ratio of the maximum allowed system peak current value and the number of battery packs, and the second time requirement is set to the ratio of the system energy threshold value and the squared value of the maximum allowed system peak current value, and to set a second individual energy fuse trigger for each battery pack as the product of the squared value of the individual battery pack current threshold and the second time requirement, wherein the individual battery pack current threshold is set to the product of the ratio of the maximum allowed system peak current value and the number of battery packs, and the first maximum allowed overcurrent value, and the second time requirement is set to the ratio of the system energy threshold value and the product of the squared value of the maximum allowed system peak current value and the squared value of the second maximum allowed overcurrent value. A technical benefit may include a more versatile way of setting the individual energy fuse triggers for the battery packs. Thus, different currents, or overcurrents, may be compared with different time triggers to set multiple triggers of the fuses of the battery packs.

Optionally in some examples, including in at least one preferred example, the processing circuitry is further configured to set a time independent individual fuse trigger for each battery pack corresponding to the individual battery pack current threshold set to the product of the ratio of the maximum allowed system peak current value and the number of battery packs, and a third maximum allowed overcurrent value of between 110 % and 180 %, preferably about 160 %. A technical benefit may include a more versatile way of setting the trigger for the fuses of the battery packs. Thus, in addition to the individual energy fuse trigger(s), the time independent individual fuse trigger for each battery pack may trigger the fuse independently of the individual energy fuse trigger(s). Thus, the individual battery pack current threshold may be set to the value resulting from the product of a first factor being the value of the ratio of the maximum allowed system peak current value and the number of battery packs, and a second factor being the third maximum allowed overcurrent value. It should be mentioned that the fuses of the battery packs may be configured to also be activated in response to an overcurrent in the individual battery pack. For example, the fuses of the battery packs may be configured to comply with the UN ECE Regulation No. 100 or R100 (short-circuit testing).

Optionally in some examples, including in at least one preferred example, the processing circuitry is further configured to define the maximum allowed system peak current value as the maximum allowed peak current of a load being powered by the energy storage system via the common traction voltage bus. Hereby, a suitable value for the maximum allowed system peak current is provided. The load may e.g. be an auxiliary load or an auxiliary equipment of the vehicle, such as a crane, defining the highest system peak current value for the energy storage system. The load may e.g. be operated by a default current value, i.e. the current which the load request or require from the energy storage system and the common traction voltage bus. The default current value may be used as a base value for determining the maximum allowed system peak current. For example, the maximum allowed system peak current may be set as the product of the default current value and a fourth maximum allowed overcurrent value of between 110 % and 180 %, preferably about 150 %, typically reflecting a short transient peak current which the load may request or require from the energy storage system and the common traction voltage bus. Thus, the common traction voltage bus is typically electrically connected to a load. Thus, the previously mentioned connected battery pack(s) may be referred to as battery pack(s) in which the associated contactor is closed for powering the load via the common traction voltage bus, and the previously mentioned disconnected battery pack(s) may be referred to as battery pack(s) in which the associated contactor is opened and the battery pack(s) is electrically disconnected from the common traction voltage bus, and thus unable to power the load. However, it should be mentioned that a disconnected battery pack may additionally or alternatively be defined as a battery pack that is disconnected from the energy storage system, e.g. by that the fuse of such battery pack has been activated, thereby electrically isolating the battery pack from the other components and battery packs of the energy storage system.

Optionally in some examples, including in at least one preferred example, the processing circuitry is comprised in a battery management system for the energy storage system. Alternatively, the processing circuitry may be comprised in a central control unit, central ECU, of the vehicle, the central control unit being a battery management system for the battery packs of the energy storage system.

According to a second aspect of the disclosure, a vehicle comprising the computer system of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises the energy storage system described with reference to the first aspect of the disclosure. Moreover, the vehicle may comprise a load being powered by the energy storage system via the common traction voltage bus. The load may e.g. be an auxiliary load or an auxiliary equipment of the vehicle, such as a crane, as described with reference to the first aspect of the disclosure.

According to a third aspect of the disclosure, a computer-implemented method is provided. The method comprises: determining, by a processing circuitry of a computer system, a system energy threshold value in an energy storage system comprising a plurality of parallelly arranged battery packs connectable to a common traction voltage bus, the system energy threshold value corresponding to the product of the squared value of a system threshold current on the common traction voltage bus and a first time requirement; determining, by the processing circuitry, a maximum allowed system peak current value, the maximum allowed system peak current value corresponding to that of the common traction voltage bus; setting, by the processing circuitry, an individual energy fuse trigger for each battery pack corresponding to the product of the squared value of an individual battery pack current threshold and a second time requirement, wherein the individual battery pack current threshold is set based on the maximum allowed system peak current value in relation to the number of battery packs, and the second time requirement is set based on the system energy threshold value in relation to the squared value of the maximum allowed system peak current value. The third aspect of the disclosure may seek to solve the same problem as described for the first aspect of the disclosure. Thus, effects and features of the third aspect of the disclosure are largely analogous to those described above in connection with the first aspect of the disclosure, and are not repeated here again. The processing circuitry is e.g. that of the first aspect of the disclosure.

Optionally in some examples, including in at least one preferred example, the method further comprises: defining, by the processing circuitry, the battery packs of the energy storage system as those being electrically connected to the common traction voltage bus, such that the setting of the individual energy fuse trigger is adapted in response to a change in the number of battery packs connected to the common traction voltage bus.

Optionally in some examples, including in at least one preferred example, the method further comprises: setting, by the processing circuitry, the individual battery pack current threshold to at least the ratio of the maximum allowed system peak current value and the number of battery packs.

Optionally in some examples, including in at least one preferred example, the method further comprises: setting, by the processing circuitry, the individual battery pack current threshold to the ratio of the maximum allowed system peak current value and the number of battery packs, or the product of the ratio of the maximum allowed system peak current value and the number of battery packs, and the first maximum allowed overcurrent value of between 110 % and 180 %, preferably about 150 %.

Optionally in some examples, including in at least one preferred example, the method further comprises: setting, by the processing circuitry, the second time requirement to at least the ratio of the system energy threshold value and the product of the squared value of the maximum allowed system peak current value and a second maximum allowed overcurrent value of between 110 % and 180 %, preferably about 150 %.

Optionally in some examples, including in at least one preferred example, the method further comprises: setting, by the processing circuitry, the second time requirement to the ratio of the system energy threshold value and the squared value of the maximum allowed system peak current value, or the ratio of the system energy threshold value and the product of the squared value of the maximum allowed system peak current value and the squared value of a second maximum allowed overcurrent value of between 110 % and 180 %, preferably about 150 %.

Optionally in some examples, including in at least one preferred example, the method further comprises: setting the individual energy fuse trigger for each battery pack as the product of the squared value of the individual battery pack current threshold and the second time requirement, wherein the individual battery pack current threshold is set to the ratio of the maximum allowed system peak current value and the number of battery packs, and the second time requirement is set to the ratio of the system energy threshold value and the squared value of the maximum allowed system peak current value.

Optionally in some examples, including in at least one preferred example, the method further comprises: setting the individual energy fuse trigger for each battery pack as the product of the squared value of the individual battery pack current threshold and the second time requirement, wherein the individual battery pack current threshold is set to the product of the ratio of the maximum allowed system peak current value and the number of battery packs, and the first maximum allowed overcurrent value of between 110 % and 180 %, preferably about 150 %, and the second time requirement is set to the ratio of the system energy threshold value and the product of the squared value of the maximum allowed system peak current value and the squared value of a second maximum allowed overcurrent value of between 110 % and 180 %, preferably about 150 %.

Optionally in some examples, including in at least one preferred example, the method further comprises: setting a first individual energy fuse trigger for each battery pack as the product of the squared value of the individual battery pack current threshold and the second time requirement, wherein the individual battery pack current threshold is set to the ratio of the maximum allowed system peak current value and the number of battery packs, and the second time requirement is set to the ratio of the system energy threshold value and the squared value of the maximum allowed system peak current value, and to set a second individual energy fuse trigger for each battery pack as the product of the squared value of the individual battery pack current threshold and the second time requirement, wherein the individual battery pack current threshold is set to the product of the ratio of the maximum allowed system peak current value and the number of battery packs, and the first maximum allowed overcurrent value of between 110 % and 180 %, preferably about 150 %, and the second time requirement is set to the ratio of the system energy threshold value and the product of the squared value of the maximum allowed system peak current value and the squared value of a second maximum allowed overcurrent value of between 110 % and 180 %, preferably about 150 %.

Optionally in some examples, including in at least one preferred example, the method further comprises: setting a time independent individual fuse trigger for each battery pack corresponding to the individual battery pack current threshold set to the product of the ratio of the maximum allowed system peak current value and the number of battery packs, and a third maximum allowed overcurrent value of between 110 % and 180 %, preferably about 160 %.

Optionally in some examples, including in at least one preferred example, the method further comprises: defining the maximum allowed system peak current value as the maximum allowed peak current of a load being powered by the energy storage system via the common traction voltage bus.

According to a fourth aspect of the disclosure, a computer program product comprising program code for performing, when executed by the processing circuitry, the method of the third aspect of the disclosure is provided. The processing circuitry is e.g. that of the first aspect of the disclosure.

According to a fifth aspect of the disclosure, non-transitory computer-readable storage medium comprising instructions, which when executed by the processing circuitry, cause the processing circuitry to perform the method of the third aspect of the disclosure is provided. The processing circuitry is e.g. that of the first aspect of the disclosure.

The fourth to fifth aspects of the disclosure may seek to solve the same problem as described for the first aspect of the disclosure. Thus, effects and features of the fourth to fifth aspects of the disclosure are largely analogous to those described above in connection with the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

**FIG. 1** is an exemplary, partly schematic, side view of an electric vehicle comprising an energy storage system having a plurality of parallelly arranged battery packs, and a computer system according to one example.

**FIG. 2** is a schematic view of an energy storage system of a vehicle, the energy storage system having a plurality of parallelly arranged battery packs and a computer system according to one example.

**FIG. 3** is a flowchart illustrating the actions or steps of a method according to one example.

**FIG. 4** is a schematic diagram of an exemplary computer system for implementing examples disclosed herein, according to one example.

## DETAILED DESCRIPTION

The detailed description set forth below provides information and examples of the disclosed technology with sufficient detail to enable those skilled in the art to practice the disclosure.

The disclosed technology may solve the problem relating to undesirable and manually setting of individual fuse triggers of the battery packs of the energy storage system, and/or undesirable and manually re-configuration of the individual fuse triggers of the battery packs in case the number of battery packs changes, e.g. if a battery pack fail and needs to be removed from the energy storage system. For example, the processing circuitry may be configured to dynamically determine individual energy fuse trigger(s) for each battery pack based on the current configuration of battery packs of the energy storage system and the system's overall energy requirements, such as the maximum allowed system peak current value and the system energy threshold value. Due to the safety reasons, and the system requirements, the battery packs are protected by means of fuses, or overcurrent fuses. However, as the number of battery packs in a system may vary over time, or at least the battery packs used for powering a load may vary over time, the triggering of the fuses may advantageously be adapted over time. The disclosed technology provides an energy storage system with such improved adaptability, which may improve the operability and safety of the energy storage system under varying operational conditions. A technical benefit may include a tailored approach to preventing undesired overcurrent situations, and/or undesired triggering of individual fuses the battery packs. Moreover, the ability of the energy storage system to dynamically adjust the individual energy fuse trigger based on the number of battery packs in the energy storage system makes it scalable and flexible.

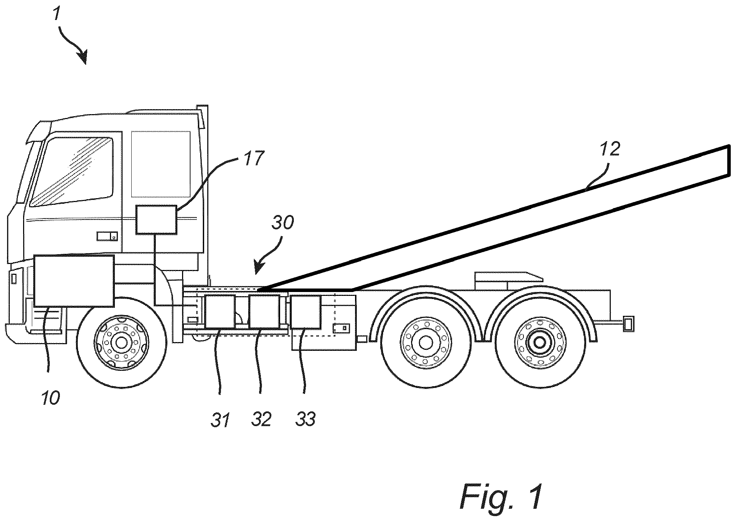

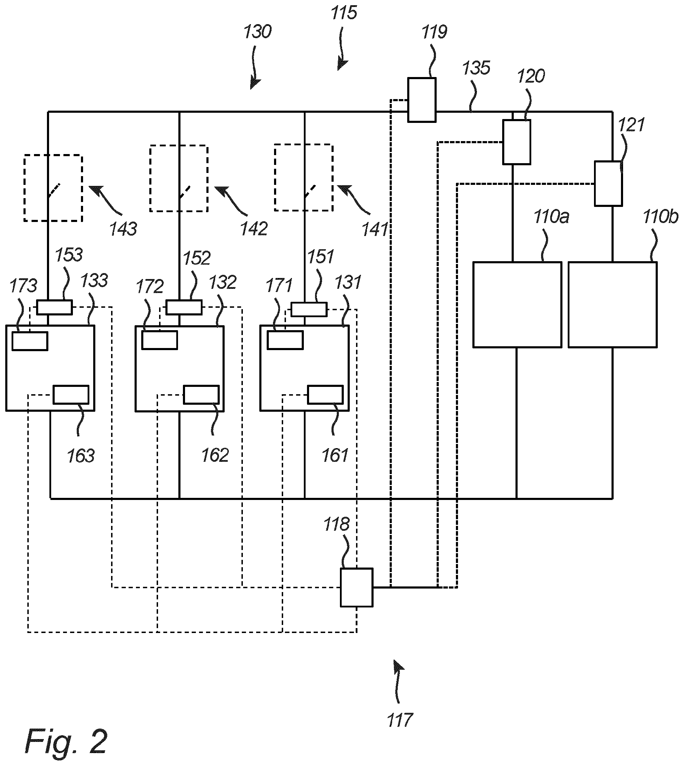

**FIG. 1** shows a vehicle 1 in the form of an exemplary heavy duty truck. The vehicle 1 is an electric vehicle, such as a full electric vehicle or a hybrid, comprising at least one electric machine 10 (as an electric traction machine) powered by an energy storage system 30, wherein in the example of Fig. 1, the energy storage system 30 comprises three parallelly connected battery packs 31, 32, 33. The battery packs 31, 32, 33 are configured to power at least one load, such as the electric machine 10, and/or an auxiliary load or equipment 12, here exemplified as a crane. The vehicle 1 further comprises associated contactor for each battery pack 31, 32, 33 (exemplified in Fig. 2), the contactors being configured to connect and disconnect the battery packs 31, 32, 33 by closing and opening, respectively. The contactors may be comprised in a switching arrangement. Moreover, the vehicle 1 comprises a computer system 17 (comprising, or being comprised in, a control unit) arranged and configured for controlling at least parts of the operation of the energy storage system 30, such as e.g. the opening and closing of the contactors. The vehicle 1 typically further comprises other parts of the powertrain such as transmission, drive shafts and wheels (not shown in detail). The electric machine 10 may be operated as an electric motor consuming electricity provided by the battery packs 31, 32, 33, e.g. to provide propulsion power, and may be operated as a generator to generate electricity to charge the battery packs 31, 32, 33. The auxiliary load 12 may be configured to request or require a higher current from the energy storage system 30 as compared to the electric machine 10.

**FIG. 2** is a schematic view of an energy storage system 130 having a plurality of parallelly connected battery packs 131, 132, 133, and a computer system 117 comprising processing circuitry 118. The example shown in Fig. 2 may be implemented in the vehicle 1 of Fig. 1. The plurality of battery packs 131, 132, 133 is arranged in parallel for connection to a common traction voltage bus 135 and powering of a plurality of loads 1 10a, 110b (e.g. a first load 110a being an electric machine, e.g. as electric machine 10 of Fig. 1 and a second load 110b being an auxiliary load, e.g. the crane 12 of Fig. 1). The energy storage system 130 comprises a plurality of contactors 141, 142, 143, typically comprised in a switching arrangement 115, configured to connect and disconnect the battery packs 131, 132, 133 to and from the common traction voltage bus 135. The common traction voltage bus 135 may in some examples be comprised in a junction box.

Each one of the battery packs 131, 132, 133 typically comprises a plurality of series-connected battery cells. The battery cells may be clustered into battery modules, wherein each battery pack comprises a plurality of series-connected battery modules. The battery cells in a battery module may be series-connected and/or be parallelly connected. The energy storage system 130 may be referred to as a multi-battery pack system.

In more detail, the energy storage system 130 comprises a first battery pack 131, a second battery pack 132 and a third battery pack 133, but it should be noted that any number of battery packs equal to, or higher than, two may be included in the energy storage system 130. The energy storage system 130 comprises an associated contactor 141, 142, 143 for each battery pack 131, 132, 133. Thus, a first contactor 141 is configured to connect and disconnect the first battery pack 131 to and from to the common traction voltage bus 135 by closing and opening, respectively, and a second contactor 142 is configured to connect and disconnect the second battery pack 132 to and from the common traction voltage bus 135 by closing and opening, respectively, and a third contactor 143 is configured to connect and disconnect the third battery pack 133 to and from the common traction voltage bus 135 by closing and opening, respectively. Thus, an associated contactor, here being the first, second and third contactors 141, 142, 143, is provided for each battery pack, here being the corresponding first, second and third battery packs 131, 132, 133. The plurality of loads 110a, 110b may be powered by all, some, or any one, of the first, second and third battery packs 131, 132, 133 by closing the corresponding first, second and third contactors 141, 142, 143, i.e. by independently connecting the first, second and third battery packs 131, 132, 133 to the common traction voltage bus 135.

Any one of, some, or all of, the first, second and third battery packs 131, 132, 133 may be disconnected from the common traction power bus 135 by opening the corresponding the first, second and third contactors 141, 142, 143. The computer system 117, or processing circuitry 118, is configured to control at least part of the operation of the contactors 141, 142, 143, and thus the opening and closing of the first, second and third contactors 141, 142, 143. The contactors 141, 142, 143 are, via the computer system 117, configured to disconnect the first, second and third battery packs 131, 132, 133 from the common traction voltage bus 135 by means of the first, second and third contactors 141, 142, 143, respectively. The energy storage system 130 may comprise additional contactors (e.g. pre-charge contactors, secondary contactors) for one or more of the battery packs 131, 132, 133.

The energy storage system 130 of Fig. 2 comprises a plurality of sensors configured to measure the current in each one of the battery packs 131, 132, 133. In more detail, a first current sensor 151 is configured to measure a current in the first battery pack 131 and may be configured to send sensor data of the current measurement to the processing circuitry 118 of the computer system 117, a second current sensor 152 is configured to measure a current in the second battery pack 132 and may be configured to send sensor data 162 of the current measurement to the processing circuitry 118 of the computer system 117, and a third current sensor 153 is configured to measure a current in the third battery pack 133 and may be configured to send sensor data 163 of the current measurement to the processing circuitry 118 of the computer system 117. For example, each one of the first, second and third current sensor 151, 152, 153 may be arranged to measure the current of the whole battery pack 131, 132, 133, e.g. by being electrically connected to a corresponding terminal 171, 172, 173 of the battery packs 131, 132, 133, but may alternatively be arranged to measure the current in a corresponding battery cell, or group of battery cells, in an associated battery module of the battery packs 131, 132, 133. Each one of the first, second and third current sensors 151, 152, 153 is schematically shown in Fig. 2. Such current sensors are typically arranged to measure the current in the corresponding battery pack 131, 132, 133. However, it should be mentioned that the sensors may be voltage sensors, or another type of sensor, which determine the current based on measurements of the voltage in the corresponding battery pack 131, 132, 133 using applicable empirical laws, such as e.g. Ohm's law. Thus, as such determined current is based on measurements (voltage, resistance, etcetera), it may still be referred to as determined measured current. Also, it should be noted that one of more of the first, second and third current sensors 151, 152, 153 may be a combined current and voltage sensor. The computer system 117 and the processing circuitry 118 may be configured to receive the sensor data from the current sensors 151, 152, 153, or measured current, from the current sensors 151, 152, 153. It should be noted that at least parts of the computer system 117 may be located outside the vehicle 1, and/or be distributed inside the battery packs 131, 132, 133. The energy storage system 130 may further comprise other current sensors, such as a fourth current sensor 119 configured to measure the current of the common traction voltage bus 135, and/or a fifth current sensor 120 configured to measure the current of the first load 110a, and/or a sixth current sensor 121 configured to measure the current of the second load 110b.

The energy storage system 130 of Fig. 2 comprises a plurality of fuses 161, 162, 163 configured to deactivate the battery packs 131, 132, 133 (e.g. to disrupt, disconnected, cut or burn an internal circuit of each one of the battery packs 131, 132, 133). In the example of Fig. 2, the fuses 161, 162, 163 of the energy storage system 130 comprises a first fuse 161 comprised in the first battery pack 131, a second fuse 162 comprised in the second battery pack 132 and a third fuse 163 comprised in the third battery pack 133. The fuses 161, 162, 163 may be referred to as overcurrent fuses. The fuses 161, 162, 163 may e.g. be pyro-fuses or semiconductor fuses, but are preferably controllable fuses 161, 162, 163 for which the fuse triggering may be individually set and controlled. For example, the processing circuitry 118 may be configured to activate the fuses 161, 162, 163 by sending a fuse triggering signal to the battery packs 131, 132, 133. Thus, the fuses 161, 162, 163 are configured to protect the battery packs 131, 132, 133 with regards to an overcurrent.

The processing circuitry 118 of the computer system 117 is configured to determine a system energy threshold value SET in the energy storage system 13. The system energy threshold value SET corresponds to the product of the squared value of a system threshold current IST on the common traction voltage bus 135 and a first time requirement t1. For example, the system energy threshold value SET may be defined as:

$$SET = IST^2 * t1 \qquad\qquad (1)$$

The system energy threshold SET is e.g. set based on the knowledge of the system threshold current IST and the time (i.e. the first time requirement 11) for which such current is allowed in the system, here on the common traction voltage bus 135. Thus, the system threshold current IST and the first time requirement t1 may be predetermined, and correspond to the load(s) 110a, 110b powered by the energy storage system 130. For example, the system energy threshold value SET may be set to 5 MA$^2$s.

The processing circuitry 118 of the computer system 117 is further configured to determine a maximum allowed system peak current value IM. The maximum allowed system peak current value IM corresponds to that of the common traction voltage bus 135. According to one example, the processing circuitry 118 is configured to define the maximum allowed system peak current value IM as the maximum allowed peak current of a load 110a, 110b being powered by the energy storage system 130 via the common traction voltage bus 135. For example, any one of the first and second loads 110a, 110b may be operated by a default current value, i.e. the current which the corresponding load 110a, 110b request or require from the energy storage system 130 and the common traction voltage bus 135. For the example of Fig. 2 and in case the second load 110b is a crane as in Fig. 1, the default current value may e.g. be 1000 A. By using the default current value as a base value for determining the maximum allowed system peak current, the latter typically reflecting a short transient peak current which the load 110b may request or require from the energy storage system 130 and the common traction voltage bus135, the maximum allowed system peak current value IM may be set to the product of the default current value and a maximum allowed overcurrent value of e.g. 150 %. Thus, for an example in which the default current value is 1000 A, the maximum allowed system peak current value IM is 1500 A.

The processing circuitry 118 of the computer system 117 is further configured to set an individual energy fuse trigger IEFT for each battery pack 131, 132, 133, or rather for each one of the corresponding fuses 161, 162, 163 of the battery packs 131, 132, 133. The individual energy fuse trigger IEFT corresponds to the product of the squared value of the individual battery pack current threshold IBT and a second time requirement t2, wherein the individual battery pack current threshold IBT is set based on the maximum allowed system peak current value IM in relation to the number N of battery packs, and the second time requirement t2 is set based on the system energy threshold value in relation to the squared value of the maximum allowed system peak current value IM. For example, the individual energy fuse trigger IEFT for each battery pack 131, 132, 133 is set as the product of the squared value of the individual battery pack current threshold IBT and the second time requirement t2:

$$IEFT = IBT^2 * t2 \qquad\qquad (2)$$

Moreover, the individual battery pack current threshold IBT may be is set to the ratio of the maximum allowed system peak current value IM and the number N of battery packs 131, 132, 133, while the second time requirement t2 is set to the ratio of the system energy threshold value SET and the squared value of the maximum allowed system peak current value IM:

$$IBT = IM/N \qquad\qquad (3)$$

$$t2 = SET/IM^2 \qquad\qquad (4)$$

Thus, with the example figures given above, i.e. the system energy threshold value SET being 5 MA$^2$s and the maximum allowed system peak current value IM being 1500 A, the resulting value of the individual battery pack current threshold IBT will be 500 A (N being three in the example system of Fig. 2) and the second time requirement t2 will be 2.2 s. Thus, the individual energy fuse trigger IEFT for each battery pack 131, 132, 133 would be based on 500 A for 2.2 s, or 550 kA$^2$s

Alternatively, or additionally, the individual battery pack current threshold IBT is set to the product of the ratio of the maximum allowed system peak current value IM and the number N of battery packs, and a first maximum allowed overcurrent value of e.g. 150 %, and the second time requirement t2 is set to the ratio of the system energy threshold value SET and the product of the squared value of the maximum allowed system peak current value IM and the squared value of a second maximum allowed overcurrent value of e.g. 150 %:

$$IBT = 1.5 * IM/N \qquad\qquad (5)$$

$$t2 = SET/(IM^2 * 1.5^2) \qquad\qquad (6)$$

Thus, with the example figures given above, i.e. the system energy threshold value SET being 5 $MA^2s$ and the maximum allowed system peak current value IM being 1500 A, the resulting value of the individual battery pack current threshold IBT will be 750 A (N being three in the example system of Fig. 2) and the second time requirement t2 will be 0.99 s. Thus, the individual energy fuse trigger IEFT for each battery pack 131, 132, 133 would be based on 750 A for 0.99 s, or 557 $kA^2s$.

It should be noted that the processing circuitry 118 may be configured to set the individual energy fuse trigger IEFT for each battery pack 131, 132, 133 to somewhere in between the two above alternatives, i.e. by using a value of the individual battery pack current threshold IBT being somewhere in between the resulting values of equations 3 and 5, and by using a value of the second time requirement t2 being somewhere in between the resulting values of equations 4 and 6.

Moreover, and according to one example, each one of the fuses 161, 162, 163 of the battery packs 131, 132, 133 may be configured to be activated by more than one individual energy fuse trigger IEFT. For example, the processing circuitry 118 may be configured to set a first individual energy fuse trigger for each battery pack 131, 132, 133 based on the equations 2, 3 and 4 above, and to set a second individual energy fuse trigger for each battery pack 131, 132, 133 based on the equations 2, 5 and 6 above. Obviously, the individual battery pack current threshold IBT and the second time requirement t2 will be different for the two individual energy fuse triggers. As a further alternative, each one of the battery packs 131, 132, 133 may comprise at least two fuses, wherein a first one of the fuses for each battery pack 131, 132, 133 is configured to be activated by the first individual energy fuse trigger and a second one of the fuses for each battery pack 131, 132, 133 is configured to be activated by the second individual energy fuse trigger.

As the number N of battery packs 131, 132, 133 is included in the setting of the individual battery pack current threshold IBT, the processing circuitry 118 provides for the ability of the energy storage system 130 to dynamically adjust the individual energy fuse trigger IEFT based on the number of battery packs 131, 132, 133 in the energy storage system 130 making it scalable and flexible. The processing circuitry 118 may e.g. be configured to define the battery packs 131, 132, 133 of the energy storage system 130 as those being electrically connected to the common traction voltage bus 135. Hereby, the setting of the individual energy fuse trigger IEFT is adapted in response to a change in the number of battery packs 131, 132, 133 connected to the common traction voltage bus 135. As described for the energy storage system 130 of Fig. 2, the battery packs 131, 132, 133 are connectable to the common traction voltage bus 135 by means of corresponding contactors 141, 142, 143. Thus, a connected battery pack 131, 132, 133 is referring to a battery pack 131, 132, 133 which is electrically connected to the common traction voltage bus 135 and for which the associated contactor 141, 142, 143 is closed, while a disconnected battery pack 131, 132, 133 is referring to a battery pack 131, 132, 133 which is not electrically connected to the common traction voltage bus 135 and for which the associated contactor 141, 142, 143 is open. Thus, any disconnected battery pack(s) may not be considered a battery pack of the energy storage system 130 with regards to the previously described equations 3 and 5.

In addition to the individual energy fuse trigger(s) IEFT for each battery pack 131, 132, 133 described above, the processing circuitry 118 may be further configured to set a time independent individual fuse trigger TI-IFT for each battery pack 131, 132, 133 corresponding to the individual battery pack current threshold IBT set to the product of the ratio of the maximum allowed system peak current value IM and the number of battery packs 131, 132, 133, and a third maximum allowed overcurrent value of e.g. 160 %:

$$TI\text{-}IFT = IBT = 1.6 * IM/N \qquad (7)$$

Thus, with the example figures given above, i.e. the maximum allowed system peak current value IM being 1500 A, the resulting value of the time independent individual fuse trigger TI-IFT will be 800 A. Thus, in case the current for one of the battery packs 131, 132, 133 reaches 800 A, the corresponding fuse 161, 162, 163 will be activated. Obviously, the individual battery pack current threshold IBT will be different for the time independent individual fuse trigger TI-IFT and the individual energy fuse trigger(s) IEFT. As a further alternative, each one of the battery packs 131, 132, 133 may comprise at least two fuses, or at least three fuses, wherein at least a first one of the fuses for each battery pack 131, 132, 133 is configured to be activated by the individual energy fuse trigger(s) and a second one, or a third one, of the fuses for each battery pack 131, 132, 133 is configured to be activated by the time independent individual fuse trigger.

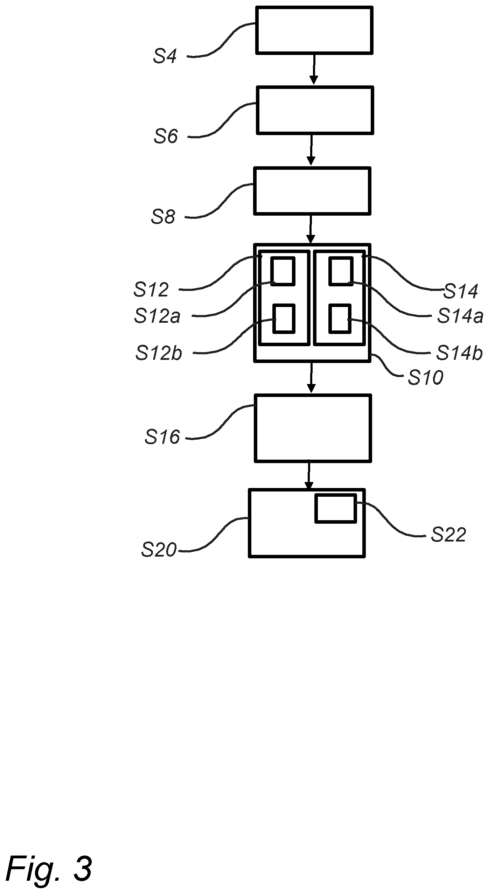

FIG. 3 is a flow chart of a computer-implemented method for controlling fuse triggering of battery packs in an energy storage system, such as the energy storage system 30 of Fig. 1 or energy storage system 130 of Fig. 2.

In a first action or step, S6, a system energy threshold value SET for an energy storage system comprising is determined by a processing circuitry of a computer system, the energy storage system comprising a plurality of parallelly arranged battery packs connectable to a common traction voltage bus, such as the battery packs 131, 132, 133 connectable to the common traction voltage bus 135 in the energy storage system 130 of Fig. 2. The system energy threshold value SET corresponds to the product of the squared value of the system threshold current IST on the common traction voltage bus and a first time requirement t1, as previously described.

In a second action or step S8, a maximum allowed system peak current value IM is determined by the processing circuitry. The maximum allowed system peak current value IM corresponds to that of the common traction voltage bus, as previously described.

In a third action or step S10, an individual energy fuse trigger IEFT is set, by the processing circuitry, for each battery pack. The individual energy fuse trigger IEFT corresponds to the product of the squared value of the individual battery pack current threshold IBT and a second time requirement t2. The individual battery pack current threshold IBT is set, by the processing circuitry, based on the maximum allowed system peak current value IM in relation to the number N of battery packs, and the second time requirement t2 is set, by the processing circuitry, based on the system energy threshold value SET in relation to the squared value of the maximum allowed system peak current value IM. However, the number N of battery packs may be defined prior to the third action or step. For example, in a pre-action or pre-step S4, the battery packs of the energy storage system used for determining the individual energy fuse trigger IEFT are defined, by the processing circuitry, as those battery packs being electrically connected to the common traction voltage bus, such that the setting of the individual energy fuse trigger IEFT is adapted, by the processing circuitry, in response to a change in the number of battery packs connected to the common traction voltage bus.

In a fourth action or step S12, the individual battery pack current threshold IBT is set, by the processing circuitry, to at least the ratio of the maximum allowed system peak current value IM and the number N of battery packs. For example, the individual battery pack current threshold IBT may be set, by the processing circuitry, in a first sub-step S12a to the ratio of the maximum allowed system peak current value IM and the number N of battery packs, as previously shown in equation 3, and/or be set, by the processing circuitry, in a second sub-step S12b to the product of the ratio of the maximum allowed system peak current value IM and the number N of battery packs, and the first maximum allowed overcurrent value of e.g. 150 %., as previously shown in equation 5.

In a fifth action or step S14, the second time requirement t2 is set, by the processing circuitry, to at least the ratio of the system energy threshold value SET and the product of the squared value of the maximum allowed system peak current value IM and the second maximum allowed overcurrent value of e.g. 150 %. For example, the second time requirement t2 may be set, by the processing circuitry, in a first sub-step S14a to the ratio of the system energy threshold value SET and the squared value of the maximum allowed system peak current value IM, as previously shown in equation 4, and/or be set, by the processing circuitry, in a second sub-step S14b, to the ratio of the system energy threshold value and the product of the squared value of the maximum allowed system peak current value IM and the squared value of the second maximum allowed overcurrent value of e.g. 150 %, as previously shown in equation 6.

Thus, the fourth action or step S12 and the fifth action or step S14 are used in the third action or step S10 to determine the individual energy fuse trigger IEFT for each battery pack, as also seen in Fig. 3.

In a sixth action or step S16, a time independent individual fuse trigger TI-IFT for each battery pack is set, by the processing circuitry. The time independent individual fuse trigger TI-IFT corresponds to the individual battery pack current threshold IBT set to the product of the ratio of the maximum allowed system peak current value IM and the number N of battery packs, and the third maximum allowed overcurrent value of e.g. 160 %, as previously shown in equation 7.

In a seventh action or step S20, at least one of the battery packs is fuse triggered by the processing circuitry, and/or a fuse triggering of at least one of the battery packs is identified by the processing circuitry. That is, with further reference to Fig. 2, the fuses 161, 162, 163 of the battery backs 131, 132, 133 may be controllable fuses 161, 162, 163 configured to be activated in response to that the criterium or criteria for triggering the fuses is/are met, the criterium or criteria corresponding to the individual energy fuse trigger(s) IEFT and/or the time independent individual fuse trigger TI-IFT. For example, in an eighth action or step S22, the current for each one of the battery packs 131, 132, 133 are determined, by the processing circuitry. This may be achieved by the previously described current sensors 151, 152, 153. The eighth action or step S22 may comprise receiving, by the processor circuitry, sensor data from the current sensors 151, 152, 153, the sensor data including the current for the battery packs 131, 132, 133. The determined current ID of the battery packs 131, 132, 133 may be used, together with the determined second time requirement t2, to determine, by the processing circuitry, the energy E for each battery pack 131, 132, 133:

$$E = ID^2 * t2 \qquad\qquad (8)$$

The determined energy for each battery pack may then be compared, by the processing circuitry, with the individual energy fuse trigger(s) IEFT as previously described. In response to that the determined energy for at least one of the battery packs 131, 132, 133 is equal to or above the corresponding individual energy fuse trigger IEFT (e.g. the first or second individual energy fuse trigger), the fuse 161, 162, 163 of that battery pack 131, 132, 133, or all fuses 161, 162, 163 of the battery packs 131, 132, 133 of the energy storage system 130, is/are triggered. For example, the fuse(s) 161, 162, 163 may be triggered by the processing circuitry 118 as previously described. Additionally or alternatively, the determined current ID is compared with the time independent individual fuse trigger TI-IFT. In response to that the determined current ID for at least one of the battery packs 131, 132, 133 is equal to or above the corresponding time independent individual fuse trigger TI-IFT, the fuse 161, 162, 163 of that battery pack 131, 132, 133, or all fuses 161, 162, 163 of the battery packs 131, 132, 133 of the energy storage system 130, is/are triggered. For example, the fuse(s) 161, 162, 163 may be triggered by the processing circuitry 118 as previously described.

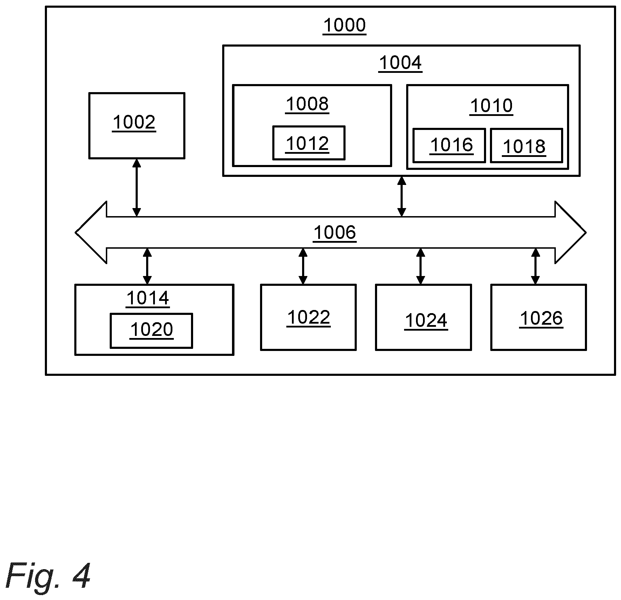

**FIG. 4** is a schematic diagram of a computer system 1000 for implementing examples disclosed herein, e.g. the method as described with reference to Fig. 3. The computer system 1000 may correspond to, or be implemented in, the computer system 17 of Fig. 1 or computer system 117 of Fig. 2. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units; e.g. corresponding to the processing circuitry 118 of Fig. 2), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system comprising processing circuitry configured to: determine a system energy threshold value in an energy storage system comprising a plurality of parallelly arranged battery packs connectable to a common traction voltage bus, the system energy threshold value corresponding to the product of the squared value of a system threshold current on the common traction voltage bus and a first time requirement; determine a maximum allowed system peak current value, the maximum allowed system peak current value corresponding to that of the common traction voltage bus; set an individual energy fuse trigger for each battery pack corresponding to the product of the squared value of an individual battery pack current threshold and a second time requirement, wherein the individual battery pack current threshold is set based on the maximum allowed system peak current value in relation to the number of battery packs, and the second time requirement is set based on the system energy threshold value in relation to the squared value of the maximum allowed system peak current value.

Example 2. The computer system of example 1, wherein the processing circuitry is further configured to: define the battery packs of the energy storage system as those being electrically connected to the common traction voltage bus, such that the setting of the individual energy fuse trigger is adapted in response to a change in the number of battery packs connected to the common traction voltage bus.

Example 3. The computer system of any of examples 1-2, wherein the processing circuitry is further configured to set the individual battery pack current threshold to at least the ratio of the maximum allowed system peak current value and the number of battery packs.

Example 4. The computer system of example 3, wherein the processing circuitry is further configured to set the individual battery pack current threshold to the ratio of the maximum allowed system peak current value and the number of battery packs, or the product of the ratio of the maximum allowed system peak current value and the number of battery packs, and the first maximum allowed overcurrent value of between 110 % and 180 %, preferably about 150 %.

Example 5. The computer system of any of examples 1-4, wherein the processing circuitry is further configured to set the second time requirement to at least the ratio of the system energy threshold value and the product of the squared value of the maximum allowed system peak current value and the squared value of a second maximum allowed overcurrent value of between 110 % and 180 %, preferably about 150 %.

Example 6. The computer system of example 5, wherein the processing circuitry is further configured to set the second time requirement to the ratio of the system energy threshold value and the squared value of the maximum allowed system peak current value, or the ratio of the system energy threshold value and the product of the squared value of the maximum allowed system peak current value and the squared value of a second maximum allowed overcurrent value of between 110 % and 180 %, preferably about 150 %.

Example 7. The computer system of any one of examples 3-4 together with any one of examples 5-6, wherein the processing circuitry is further configured to set the individual energy fuse trigger for each battery pack as the product of the squared value of the individual battery pack current threshold and the second time requirement, wherein the individual battery pack current threshold is set to the ratio of the maximum allowed system peak current value and the number of battery packs, and the second time requirement is set to the ratio of the system energy threshold value and the squared value of the maximum allowed system peak current value.

Example 8. The computer system of any one of examples 3-4 together with any one of examples 5-6, wherein the processing circuitry is further configured to set the individual energy fuse trigger for each battery pack as the product of the squared value of the individual battery pack current threshold and the second time requirement, wherein the individual battery pack current threshold is set to the product of the ratio of the maximum allowed system peak current value and the number of battery packs, and the first maximum allowed overcurrent value of between 110 % and 180 %, preferably about 150 %, and the second time requirement is set to the ratio of the system energy threshold value and the product of the squared value of the maximum allowed system peak current value and the squared value of a second maximum allowed overcurrent value of between 110 % and 180 %, preferably about 150 %.

Example 9. The computer system of examples 7 and 8, wherein the processing circuitry is further configured to set a first individual energy fuse trigger for each battery pack as defined in example 7, and to set a second individual energy fuse trigger for each battery pack as defined in example 8.

Example 10. The computer system of any of examples 1-9, wherein the processing circuitry is further configured to set a time independent individual fuse trigger for each battery pack corresponding to the individual battery pack current threshold set to the product of the ratio of the maximum allowed system peak current value and the number of battery packs, and a third maximum allowed overcurrent value of between 110 % and 180 %, preferably about 160 %.

Example 11. The computer system of any of examples 1-10, wherein the processing circuitry is further configured to define the maximum allowed system peak current value as the maximum allowed peak current of a load being powered by the energy storage system via the common traction voltage bus.

Example 12. A vehicle comprising the computer system of any of examples 1-11.

Example 13. A computer-implemented method, comprising: determining, by a processing circuitry of a computer system, a system energy threshold value in an energy storage system comprising a plurality of parallelly arranged battery packs connectable to a common traction voltage bus, the system energy threshold value corresponding to the product of the squared value of the system threshold current on the common traction voltage bus and a first time requirement; determining, by the processing circuitry, a maximum allowed system peak current value, the maximum allowed system peak current value corresponding to that of the common traction voltage bus; setting, by the processing circuitry, an individual energy fuse trigger for each battery pack corresponding to the product of the squared value of the individual battery pack current threshold and a second time requirement, wherein the individual battery pack current threshold is set based on the maximum allowed system peak current value in relation to the number of battery packs, and the second time requirement is set based on the system energy threshold value in relation to the squared value of the maximum allowed system peak current value.

Example 14. The method of example 13, further comprising: defining, by the processing circuitry, the battery packs of the energy storage system as those being electrically connected to the common traction voltage bus, such that the setting of the individual energy fuse trigger is adapted in response to a change in the number of battery packs connected to the common traction voltage bus.

Example 15. The method of any of examples 13-14, further comprising: setting, by the processing circuitry, the individual battery pack current threshold to at least the ratio of the maximum allowed system peak current value and the number of battery packs.

Example 16. The method of example 15, further comprising: setting, by the processing circuitry, the individual battery pack current threshold to the ratio of the maximum allowed system peak current value and the number of battery packs, or the product of the ratio of the maximum allowed system peak current value and the number of battery packs, and the first maximum allowed overcurrent value of between 110 % and 180 %, preferably about 150 %.

Example 17. The method of any of examples 13-16, further comprising: setting, by the processing circuitry, the second time requirement to at least the ratio of the system energy threshold value and the product of the squared value of the maximum allowed system peak current value and a second maximum allowed overcurrent value of between 110 % and 180 %, preferably about 150 %.

Example 18. The method of example 17, further comprising: setting, by the processing circuitry, the second time requirement to the ratio of the system energy threshold value and the squared value of the maximum allowed system peak current value, or the ratio of the system energy threshold value and the product of the squared value of the maximum allowed system peak current value and the squared value of a second maximum allowed overcurrent value of between 110 % and 180 %, preferably about 150 %.

Example 19. A computer program product comprising program code for performing, when executed by the processing circuitry, the method of any of examples 13-18.

Example 20. A non-transitory computer-readable storage medium comprising instructions, which when executed by the processing circuitry, cause the processing circuitry to perform the method of any of examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (17, 117) comprising processing circuitry (118) configured to:

   - determine a system energy threshold value (SET) in an energy storage system (30, 130) comprising a plurality of parallelly arranged battery packs (31, 32, 33, 131, 132, 133) connectable to a common traction voltage bus (135), the system energy threshold value (SET) corresponding to the product of the squared value of a system threshold current (IST) on the common traction voltage bus (135) and a first time requirement (t1),
   - determine a maximum allowed system peak current value (IM), the maximum allowed system peak current value (IM) corresponding to that of the common traction voltage bus (135),
   - set an individual energy fuse trigger (IEFT) for each battery pack (31, 32, 33, 131, 132, 133) corresponding to the product of the squared value of an individual battery pack current threshold (IBT) and a second time requirement (t2), wherein the individual battery pack current threshold (IBT) is set based on the maximum allowed system peak current value (IM) in relation to the number (N) of battery packs, and the second time requirement (t2) is set based on the system energy threshold value (SET) in relation to the squared value of the maximum allowed system peak current value (IM).

2. The computer system (17, 117) of claim 1, wherein the processing circuitry (118) is further configured to: define the battery packs (31, 32, 33, 131, 132, 133) of the energy storage system (30, 130) as those being electrically connected to the common traction voltage bus (135), such that the setting of the individual energy fuse trigger (IEFT) is adapted in response to a change in the number (N) of battery packs (31, 32, 33, 131, 132, 133) connected to the common traction voltage bus (135).

3. The computer system (17, 117) of any of claims 1-2, wherein the processing circuitry (118) is further configured to set the individual battery pack current threshold (IBT) to at least the ratio of the maximum allowed system peak current value (IM) and the number (N) of battery packs (31, 32, 33, 131, 132, 133).

4. The computer system (17, 117) of claim 3, wherein the processing circuitry (118) is further configured to set the individual battery pack current threshold (IBT) to the ratio of the maximum allowed system peak current value (IM) and the number (N) of battery packs (31, 32, 33, 131, 132, 133), or the product of the ratio of the maximum allowed system peak current value (IM) and the number (N) of battery packs (31, 32, 33, 131, 132, 133), and the first maximum allowed overcurrent value of between 110 % and 180 %, preferably about 150 %.

5. The computer system (17, 117) of any of claims 1-4, wherein the processing circuitry (118) is further configured to set the second time requirement (t2) to at least the ratio of the system energy threshold value (SET) and the product of the squared value of the maximum allowed system peak current value (IM) and the squared value of a second maximum allowed overcurrent value of between 110 % and 180 %, preferably about 150 %.

6. The computer system (17, 117) of claim 5, wherein the processing circuitry (118) is further configured to set the second time requirement (t2) to the ratio of the system energy threshold value (SET) and the squared value of the maximum allowed system peak current value (IM), or the ratio of the system energy threshold value (SET) and the product of the squared value of the maximum allowed system peak current value (IM) and the squared value of a second maximum allowed overcurrent value of between 110 % and 180 %, preferably about 150 %.

7. The computer system (17, 117) of any one of claims 3-4 together with any one of claims 5-6, wherein the processing circuitry (118) is further configured to set the individual energy fuse trigger (IEFT) for each battery pack (31, 32, 33, 131, 132, 133) as the product of the squared value of the individual battery pack current threshold (IBT) and the second time requirement (t2), wherein the individual battery pack current threshold (IBT) is set to the ratio of the maximum allowed system peak current value (IM) and the number (N) of battery packs (31, 32, 33, 131, 132, 133), and the second time requirement (t2) is set to the ratio of the system energy threshold value (SET) and the squared value of the maximum allowed system peak current value (IM).

8. The computer system (17, 117) of any one of claims 3-4 together with any one of claims 5-6, wherein the processing circuitry (118) is further configured to set the individual energy fuse trigger (IEFT) for each battery pack (31, 32, 33, 131, 132, 133) as the product of the squared value of the individual battery pack current threshold (IBT) and the second time requirement (t2), wherein the individual battery pack current threshold (IBT) is set to the product of the ratio of the maximum allowed system peak current value (IM) and the number (N) of battery packs (31, 32, 33, 131, 132, 133), and the first maximum allowed overcurrent value of between 110 % and 180 %, preferably about 150 %, and the second time requirement (t2) is set to the ratio of the system energy threshold value (SET) and the product of the squared value of the maximum allowed system peak current value (IM) and the squared value of a second maximum allowed overcurrent value of between 110 % and 180 %, preferably about 150 %.

9. The computer system (17, 117) of claims 7 and 8, wherein the processing circuitry (118) is further configured to set a first individual energy fuse trigger for each battery pack (31, 32, 33, 131, 132, 133) as defined in claim 7, and to set a second individual energy fuse trigger for each battery pack as defined in claim 8.

10. The computer system (17, 117) of any of claims 1-9, wherein the processing circuitry (118) is further configured to set a time independent individual fuse trigger (TI-IFT) for each battery pack (31, 32, 33, 131, 132, 133) corresponding to the individual battery pack current threshold (IBT) set to the product of the ratio of the maximum allowed system peak current value (IM) and the number (N) of battery packs (31, 32, 33, 131, 132, 133), and a third maximum allowed overcurrent value of between 110 % and 180 %, preferably about 160 %.

11. The computer system (17, 117) of any of claims 1-10, wherein the processing circuitry (118) is further configured to define the maximum allowed system peak current value (IM) as the maximum allowed peak current of a load (10, 110a, 110b) being powered by the energy storage system (30, 130) via the common traction voltage bus (135).

12. A vehicle (1) comprising the computer system (17, 117) of any of claims 1-11.

13. A computer-implemented method, comprising:

- determining (S6), by a processing circuitry of a computer system, a system energy threshold value (SET) in an energy storage system (30, 130) comprising a plurality of parallelly arranged battery packs (31, 32, 33, 131, 132, 133) connectable to a common traction voltage bus (135), the system energy threshold value (SET) corresponding to the product of the squared value of the system threshold current (IST) on the common traction voltage bus (135) and a first time requirement (t1),
- determining (S8), by the processing circuitry, a maximum allowed system peak current value (IM), the maximum allowed system peak current value (IM) corresponding to that of the common traction voltage bus (135),
- setting (S10), by the processing circuitry, an individual energy fuse trigger (IEFT) for each battery pack (31, 32, 33, 131, 132, 133) corresponding to the product of the squared value of an individual battery pack current threshold (IBT) and a second time requirement (t2), wherein the individual battery pack current threshold (IBT) is set based on the maximum allowed system peak current value (IM) in relation to the number (N) of battery packs, and the second time requirement (t2) is set based on the system energy threshold value (SET) in relation to the squared value of the maximum allowed system peak current value (IM).

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 007969 A1 (SIEMENS AG [DE]) 19 August 2010 (2010-08-19) | 1,3-15 | INV. B60L3/00 |
| A | * paragraph [0001] - paragraph [0031] * * paragraph [0047] - paragraph [0050]; figure 3 * * paragraph [0060] - paragraph [0067]; figure 8 * | 2 | B60L3/04 B60L58/19 H02H3/00 |
|  | ----- |  |  |
| A | US 5 706 153 A (INNES MARK E [US] ET AL) 6 January 1998 (1998-01-06) * column 1, line 6 - column 1, line 43 * | 1 |  |
|  | ----- |  |  |

**TECHNICAL FIELDS SEARCHED (IPC)**

B60L
H02H
H02J

The present search report has been drawn up for all claims

| Place of search | Date of completion of the search | Examiner |
|---|---|---|
| The Hague | 21 August 2024 | Utz, Tilman |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 2037

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2024

| Patent document cited in search report | Publication date | Patent family member(s) | | Publication date |
|---|---|---|---|---|
| DE 102009007969 A1 | 19-08-2010 | AU | 2010210191 A1 | 11-08-2011 |
| | | BR | PI1008140 A2 | 08-03-2016 |
| | | DE | 102009007969 A1 | 19-08-2010 |
| | | EP | 2394342 A2 | 14-12-2011 |
| | | KR | 20110118659 A | 31-10-2011 |
| | | KR | 20130118396 A | 29-10-2013 |
| | | US | 2011317321 A1 | 29-12-2011 |
| | | WO | 2010089338 A2 | 12-08-2010 |
| US 5706153 A | 06-01-1998 | AU | 2370997 A | 11-12-1997 |
| | | BR | 9702403 A | 08-09-1998 |
| | | EP | 0812047 A2 | 10-12-1997 |
| | | JP | H10117427 A | 06-05-1998 |
| | | KR | 980005134 A | 30-03-1998 |
| | | US | 5706153 A | 06-01-1998 |
| | | ZA | 974746 B | 30-12-1997 |

EPO FORM P0459

For more details about this annex : see Official Journal of the European Patent Office, No. 12/82